(19) Europäisches Patentamt
European Patent Office
Office européen des brevets

(11) **EP 4 622 126 A1**

(12) **EUROPEAN PATENT APPLICATION**

(43) Date of publication:
24.09.2025 Bulletin 2025/39

(21) Application number: 25163387.1

(22) Date of filing: 13.03.2025

(51) International Patent Classification (IPC):
H04B 5/26 (2024.01)  H02J 50/00 (2016.01)
H04B 5/77 (2024.01)  H04B 5/79 (2024.01)
H04W 4/80 (2018.01)

(52) Cooperative Patent Classification (CPC):
H04B 5/26; H02J 50/00; H04B 5/77; H04B 5/79;
H04W 4/80

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.03.2024 US 202418612593

(71) Applicant: STMicroelectronics International N.V.
1228 Plan-les-Ouates, Geneva (CH)

(72) Inventors:
• XIONG, Timon
SHANGHAI, 201615 (CN)
• WU, Gang
SHANGHAI, 200241 (CN)

(74) Representative: Cabinet Beaumont
4, Place Robert Schuman
B.P. 1529
38025 Grenoble Cedex 1 (FR)

(54) **APPARATUS AND METHOD FOR IMPROVED NEAR-FIELD COMMUNICATION (NFC) DATA TRANSMISSIONS**

(57) An example apparatus, method, and computer program product for initiating a near-field communication (NFC) data transmission from a card emulation NFC apparatus are provided. An example card emulation NFC apparatus may comprise an antenna and a card emulation controller electrically coupled to the antenna. The card emulation controller may be configured to detect a presence of a foreign object based at least in part on one or more electrical parameters of the antenna and initiate a polling command wait period upon detection of the foreign object. The card emulation controller may be further configured to adjust a physical property of the antenna in an instance in which the polling command wait period expires and a polling command is not received.

FIG. 5

EP 4 622 126 A1

## Description

## TECHNOLOGICAL FIELD

Embodiments of the present disclosure relate generally to near-field communication (NFC) devices, and more particularly, to NFC devices operating in a card emulation mode.

## BACKGROUND

Near-field communication (NFC) is a short-range wireless communication technology that enables communication between NFC enabled devices in close proximity. NFC may be utilized to facilitate authenticating credit cards, enabling physical access, transferring files, enabling other communication links, and so on. In general, NFC utilizes magnetic induction, as opposed to radio wave communication, to facilitate NFC data transmissions between two or more devices configured to support NFC transactions.

Applicant has identified many technical challenges and difficulties associated with NFC data transmissions. Through applied effort, ingenuity, and innovation, Applicant has solved problems related to NFC data transmissions by developing solutions embodied in the present disclosure, which are described in detail below.

## BRIEF SUMMARY

Various embodiments are directed to an example apparatus, method, and computer program product for initiating an NFC data transmission from a card emulation NFC apparatus. An example card emulation near-field communication (NFC) apparatus, may comprise an antenna; and a card emulation controller electrically coupled to the antenna, comprising one or more processors and one or more storage devices storing instructions that are operable, when executed by the one or more processors, to: detect a presence of a foreign object based at least in part on one or more electrical parameters of the antenna; initiate a polling command wait period; and adjust a physical property of the antenna in an instance in which the polling command wait period expires and a polling command is not received.

In some embodiments, the card emulation controller is further configured to detect the presence of the foreign object in an instance in which the polling command wait period expires and the polling command is not received.

In some embodiments, the one or more electrical parameters comprise an impedance of the antenna.

In some embodiments, the physical property of the antenna comprises a resonant frequency of the antenna.

In some embodiments, the antenna is configured to operate at a first resonant frequency, and adjusting the physical property of the antenna comprises configuring the antenna to operate at a second resonant frequency.

In some embodiments, the first resonant frequency is between 10 megahertz and 19 megahertz.

In some embodiments, the difference between the second resonant frequency and the first resonant frequency is equal to or greater than 100 kilohertz.

In some embodiments, the card emulation NFC apparatus further comprises a card emulation tuning circuit electrically coupled to the card emulation controller and the antenna, the card emulation tuning circuit comprising: one or more variable capacitors configured to adjust the resonant frequency of the antenna, wherein adjusting the physical property of the antenna comprises adjusting a capacitance value of at least one of the one or more variable capacitors.

In some embodiments, the foreign object is a master near-field communication device.

In some embodiments, adjusting the physical property of the antenna in an instance in which the polling command wait period expires and the polling command is not received causes the master near-field communication device to resend the polling command.

In some embodiments, the polling command wait period is between 5.1 milliseconds and 3 seconds.

An example method for initiating an NFC data transmission is also provided. In some embodiments, the method comprises: detecting, at a card emulation controller of a card emulation near-field communication apparatus, a presence of a foreign object based at least in part on one or more electrical parameters of an antenna, wherein the antenna is electrically coupled to the card emulation controller. The example method further comprises initiating a polling command wait period; and adjusting a physical property of the antenna in an instance in which the polling command wait period expires and a polling command is not received.

In some embodiments, the foreign object is a master NFC device.

In some embodiments, adjusting the physical property of the antenna in an instance in which the polling command wait period expires and the polling command is not received causes the master NFC device to resend the polling command.

In some embodiments, the method further comprises detecting the presence of the foreign object in an instance in which the polling command wait period expires and the polling command is not received.

In some embodiments, the one or more electrical parameters comprise an impedance of the antenna.

In some embodiments, the physical property of the antenna comprises a resonant frequency of the antenna.

In some embodiments, the antenna is configured to operate at a first resonant frequency and adjusting the physical property of the antenna comprises configuring the antenna to operate at a second resonant frequency.

In some embodiments, the method further comprises adjusting one or more variable capacitors comprising a card emulation tuning circuit electrically coupled to the card emulation controller and the antenna, wherein the one or more variable capacitors are configured to adjust the resonant frequency of the antenna.

A computer program product for initiating an NFC transmission is also provided. In some embodiments, the computer program product comprises at least one non-transitory computer-readable storage medium having computer-readable program code portions stored therein, the computer-readable program code portions comprising an executable portion configured to: detect, at a card emulation controller of a card emulation near-field communication apparatus, a presence of a foreign object based at least in part on one or more electrical parameters of an antenna, wherein the antenna is electrically coupled to the card emulation controller; initiate a polling command wait period; and adjust a physical property of the antenna in an instance in which the polling command wait period expires and a polling command is not received.

Another embodiment relates to a card emulation near-field communication (NFC) apparatus, comprising:

- an antenna; and
- a card emulation controller electrically coupled to the antenna, comprising one or more processors and one or more storage devices storing instructions that are operable, when executed by the one or more processors, to:
- initiate at least one foreign object detection process to detect a presence of a foreign object based at least in part on one or more electrical parameters of the antenna;
- initiate a polling command wait period; and
- adjust a physical property of the antenna in an instance in which the polling command wait period expires and a polling command is not received.

Another embodiment relates to a method for initiating an NFC data transmission, the method comprising:

- initiating, at a card emulation controller of a card emulation near-field communication apparatus, at least one foreign object detection process to detect a presence of a foreign object based at least in part on one or more electrical parameters of an antenna, wherein the antenna is electrically coupled to the card emulation controller;
- initiating a polling command wait period; and
- adjusting a physical property of the antenna in an instance in which the polling command wait period expires and a polling command is not received.

According to an embodiment, the one or more electrical parameters comprise an impedance of the antenna.

According to an embodiment, the physical property of the antenna comprises a resonant frequency of the antenna.

According to an embodiment, the antenna is configured to operate at a first resonant frequency and wherein adjusting the physical property of the antenna comprises configuring the antenna to operate at a second resonant frequency.

According to an embodiment, the first resonant frequency is between 10 megahertz and 19 megahertz.

According to an embodiment, the difference between the second resonant frequency and the first resonant frequency is equal to or greater than 100 kilohertz.

According to an embodiment, the apparatus further comprises:

- a card emulation tuning circuit electrically coupled to the card emulation controller and the antenna, the card emulation tuning circuit comprising:
- one or more variable capacitors configured to adjust the resonant frequency of the antenna,

wherein adjusting the physical property of the antenna comprises adjusting a capacitance value of at least one of the one or more variable capacitors.

According to an embodiment, the foreign object is a master near-field communication device.

According to an embodiment, adjusting the physical property of the antenna in an instance in which the polling command wait period expires and the polling command is not received causes the master near-field communication device to resend the polling command.

According to an embodiment, the polling command wait period is between 5.1 milliseconds and 3 seconds.

According to an embodiment, the method further comprises:

- adjusting one or more variable capacitors comprised in a card emulation tuning circuit electrically coupled to the card emulation controller and the antenna, wherein the one or more variable capacitors are configured to adjust the resonant frequency of the antenna.

Another embodiment comprises a computer program product for initiating an NFC transmission, the computer program product comprising at least one non-transitory computer-readable storage medium having computer-readable program code portions stored therein, the computer-readable program code portions comprising an executable portion configured to:

- detect, at a card emulation controller of a card emulation near-field communication apparatus, a presence of a foreign object based at least in part on one or more electrical parameters of an antenna, wherein the antenna is electrically coupled to the card emulation controller;

- initiate a polling command wait period; and
- adjust a physical property of the antenna in an instance in which the polling command wait period expires and a polling command is not received.

## BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.

FIG. 1 illustrates a diagram of an example NFC system including a card emulation apparatus in accordance with an example embodiment of the present disclosure.

FIG. 2 illustrates a diagram of an example NFC system including a card emulation NFC apparatus initiating an NFC transmission in accordance with an example embodiment of the present disclosure.

FIG. 3 illustrates an example block diagram of an apparatus configured to perform operations in accordance with an example embodiment of the present disclosure.

FIG. 4 depicts an example process for initiating an NFC data transmission from a card emulation NFC apparatus in accordance with an example embodiment of the present disclosure.

FIG. 5 depicts an example flow chart for initiating an NFC data transmission from a card emulation NFC apparatus in accordance with an example embodiment of the present disclosure.

FIG. 6 depicts an example flow chart for detecting a foreign object from a card emulation NFC apparatus in accordance with an example embodiment of the present disclosure.

FIG. 7 illustrates an example graph of an upper and lower impedance threshold for triggering foreign object detection in a card emulation NFC apparatus in accordance with an example embodiment of the present disclosure.

FIG. 8 depicts an example graph of a change in impedance over time at an antenna of a card emulation NFC apparatus in accordance with an example embodiment of the present disclosure.

FIG. 9 depicts an example polling sequence of a master NFC device in an instance in which no response is received in accordance with an example embodiment of the present disclosure.

FIG. 10 depicts an example polling sequence of a master NFC device and subsequent data transmission in an instance in which a response is received in accordance with an example embodiment of the present disclosure.

FIG. 11A - FIG. 11B depicts a graph illustrating a change in resonant frequency of an antenna of a card emulation NFC apparatus in accordance with an example embodiment of the present disclosure.

## DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with initiating an NFC data transmission between a master NFC device and a card emulation NFC apparatus. As understood by those of skill in the field to which the present disclosure pertains, there are numerous example scenarios in which two or more devices may seek to initiate an NFC data transmission.

Near-field communication (NFC) is a short-range wireless communication technology that enables communication between NFC enabled devices in close proximity. NFC may be utilized to facilitate authenticating credit cards, enable physical access to a device, transfer files, and perform other data exchanges between NFC-enabled devices. In general, NFC utilizes magnetic induction to facilitate communication as opposed to radio wave communication. Traditionally, NFC involved an active card reader that queried a passive tag or card. The active card reader generated a magnetic field that powered the passive tag. A passive NFC tag includes an antenna and may transmit responsive data once powered by the magnetic field.

However, an active NFC device having access to its own power source may also emulate an NFC tag or card in an NFC card emulation mode. NFC card emulation mode allows an active device, such as a phone or wearable, to emulate an NFC tag, such as an NFC tag on a contactless card and initiate an NFC data transmission according to the NFC protocols. In card emulation mode, the functionality of the "card" is emulated by an active device. In card emulation mode, the master NFC device and the card both have power supplies and can communicate with each other by alternate signal transmission.

Both master NFC devices and card emulation NFC apparatuses may support a low-power mode. A master NFC device operating in a low-power mode may periodically transmit a wake-up pulse (e.g., low power card detection signal) in order to detect a foreign object (e.g., the card emulation NFC apparatus). The wake-up pulse is accompanied by a measurement of a change in impedance of the master NFC device antenna. In an instance in which the measured impedance value exceeds a maximum threshold or falls below a minimum threshold, the master NFC device will wake-up and transmit a series of polling commands to initiate the NFC data transmission with the card emulation NFC apparatus. During normal operation, the card emulation NFC apparatus will respond to the polling commands and the NFC data transmission may commence.

However, in some instances, a card emulation NFC apparatus may fail to respond to the series of polling commands in a timely manner. For example, the movement of the master NFC device and/or the movement of the card emulation NFC apparatus may cause a break in the transmission link. In an instance in which the card emulation NFC apparatus does not receive the polling commands and/or does not respond appropriately within a specified time frame, the master NFC device may update the reference parameters of the current environment and re-enter a low power mode. Unless a change in the reference parameters (e.g., the devices are moved apart and placed in range again), the polling mode of the master NFC device may not be triggered. In such an instance, the NFC transaction fails to commence, even in an instance in which the two devices are kept in close proximity for an extended period of time. Such a situation may diminish the experience of a user trying to utilize NFC to complete a data transmission.

The various example embodiments described herein provide a card emulation NFC apparatus configured to trigger the transmission of a polling command from a master NFC device in a low power mode by adjusting a physical property of the card emulation NFC apparatus antenna. For example, in some embodiments, the card emulation NFC apparatus may be configured to detect a presence of a foreign object based on a change in one or more electrical parameters of the card emulation NFC apparatus antenna, such as the impedance of the antenna. In an instance in which a foreign object is detected, the card emulation NFC apparatus antenna may initiate a pre-determined polling command wait period. In an instance in which the polling command wait period expires and the foreign object is still detected as present, the card emulation NFC apparatus may attempt to cause the master NFC device to resend the polling command.

One way in which the card emulation NFC apparatus may cause the master NFC device to resend the polling command is to adjust a physical property of the card emulation NFC antenna. For example, the card emulation NFC apparatus may adjust the resonant frequency of the card emulation NFC apparatus antenna. An adjustment to a physical property of the card emulation NFC antenna may cause a change in the reference parameters monitored by the master NFC device, triggering a resend of a new series of polling commands.

As a result of the herein described example embodiments, the reliability of NFC data transmissions may be greatly improved. In other examples, a master NFC device in low power mode may update reference parameters and re-enter low power mode in an instance in which a responsive transmission is not received from a card emulation NFC device. Thus, the master NFC device will not resend unless the reference parameters of the environment substantively change. Unaware users may hold the NFC master device and the card emulation NFC device close together for an extended period of time, waiting for the NFC data transmission to commence. Only when the two devices are separated and then brought back together, are the polling commands re-sent. Difficulty initiating the NFC data transmission between two devices may be frustrating to a user. The example embodiments described herein improve the NFC data transmission process, particularly in an instance in which an NFC device in card emulation mode is utilized.

EXAMPLE APPARATUS

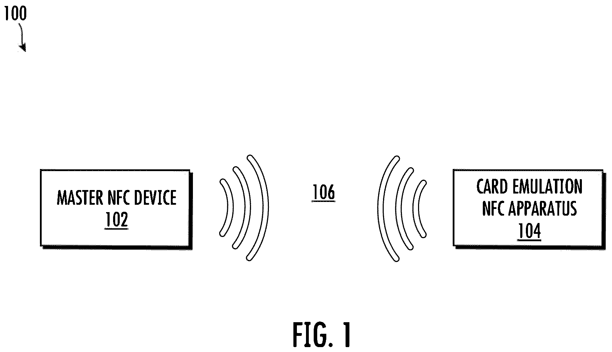

Referring now to FIG. 1, an example NFC system 100 is provided. The example NFC system depicted in FIG. 1 includes a master NFC device 102 and a card emulation NFC apparatus 104 performing an NFC data transmission 106.

As depicted in FIG. 1, the example NFC system 100 includes a master NFC device 102. The master NFC device 102 includes one or more electrical components configured to generate an electromagnetic radio frequency field to facilitate the transmission of data encoded in radio frequency waves. The master NFC device 102 may be referred to as a reader, emitter, initiator, or other similar name. The master NFC device 102 is configured with a power source to generate the electromagnetic frequency field.

A master NFC device 102 is configured to generate one or more polling commands. A polling command is any electronic signal transmitted by a master NFC device 102 utilize to initiate an NFC data transmission 106 between the devices. A polling command transmitted by a master NFC device 102 may include one or more requests for data from a receiving NFC device (e.g., NFC tag, NFC card, card emulation NFC apparatus 104, etc.). Data returned by the receiving NFC device may be necessary to facilitate the transmission of data through an NFC data transmission 106. For example, data related to the NFC data transmission encoding, authentication data, and so forth. In some embodiments, a master NFC device 102 may transmit multiple polling commands configured to communicate with different types of NFC devices, for example type A cards, type B cards, type F cards, type V cards, etc. In passive mode, the polling command may provide the power required by a passive receiving device (e.g., NFC tag, NFC card) to transmit a response. A polling command is used by the master NFC device 102 to detect valid NFC devices within transmission proximity of the master NFC device 102.

Many master NFC devices 102 are designed to be used remotely and/or utilize minimal power, for example, when operating using battery power. The master NFC device 102 may be configured to utilize a low power mode. During a low power mode, the frequency of polling commands may be reduced to save power.

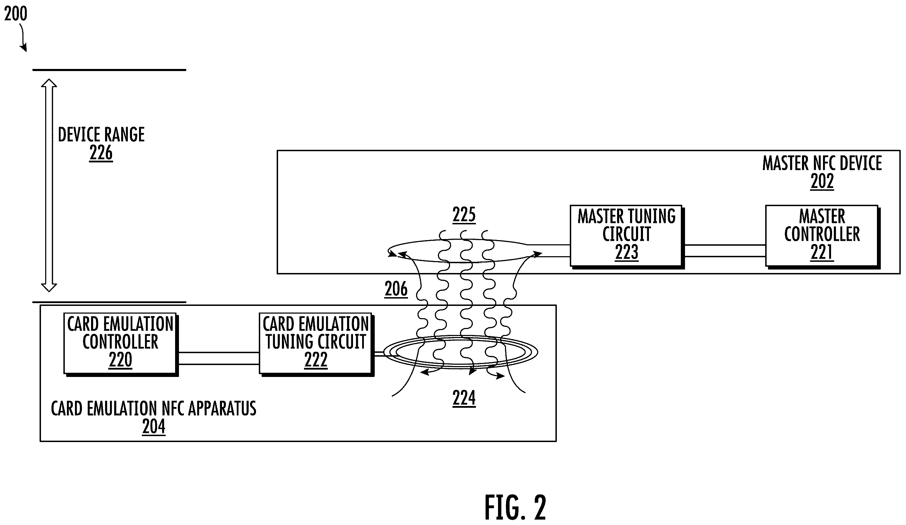

In some embodiments, a master NFC device 102 may utilize foreign object detection to dictate the transmission of polling commands. Foreign object detection is any process or algorithm implemented by a master NFC device 102 to detect the presence of a potential NFC receiving device. Foreign object detection may utilize the transmission of one or more wake-up signals and monitor changes in the electrical parameters in or around the master NFC device 102 to determine if a potential NFC receiving device is within a transmission distance. Monitored electrical parameters may include impedance, power loss, transfer efficiency, current, voltage, phase difference between current and voltage, coil quality factor, and so on. Changes to one or more of these electrical parameters based on the transmitted wake-up signal may be an indicator of an NFC receiving device within a transmission distance. One specific embodiment of foreign object detection is described in relation to FIG. 2.

As further depicted in FIG. 1, the NFC system 100 includes a card emulation NFC apparatus 104. A card emulation NFC apparatus 104 includes one or more electrical components configured to emulate and NFC card and/or NFC tag in support of receipt and transmission of an NFC data transmission. For example, a card emulation NFC apparatus 104 can be read by a master NFC device 102, just as a master NFC device 102 would read an NFC card or NFC tag. A card emulation NFC apparatus 104 includes a power source enabling the card emulation NFC apparatus 104 to generate radio frequency waves in support of an NFC data transmission 106. In some embodiments, a mobile device, such as a mobile phone, laptop, scanner, tablet, etc. may comprise a card emulation NFC apparatus 104.

During normal operation, a card emulation NFC apparatus 104 is configured to receive one or more polling commands from a master NFC device 102 and transmit data in response to the one or more polling commands to verify the card emulation NFC apparatus 104 type and/or transmission properties. In an instance in which the card emulation NFC apparatus 104 provides a valid response, the master NFC device 102 sends an NFC data transmission 106.

As further depicted in FIG. 1, the example NFC system 100 includes an NFC data transmission 106. An NFC data transmission 106 is any transmission of electronic data between a master NFC device 102 and a card emulation NFC apparatus 104. An NFC protocol may support various types of data transmission. For example, NFC protocol may facilitate the transmission of contact information, website URLs, files, documents, payment information, authentication information, tickets, and so forth. In general, NFC data transmissions 106 occur at a frequency at or near 13.56 megahertz with a data transmission rate up to 424 kilobits per second. NFC data transmissions 106 generally occur over a short range, for example, less than 10 centimeters.

Referring now to FIG. 2, an example NFC system 200 is provided. As depicted in FIG. 2, the example NFC system 200 includes card emulation NFC apparatus 204 comprising a card emulation controller 220, a card emulation tuning circuit 222, and an antenna 224. The example NFC system 200 further includes a master NFC device 202 comprising a master controller 221, a master tuning circuit 223, and an antenna 225. As further depicted in FIG. 2, a device range 226 exists, within which an NFC data transmission 206 may be performed.

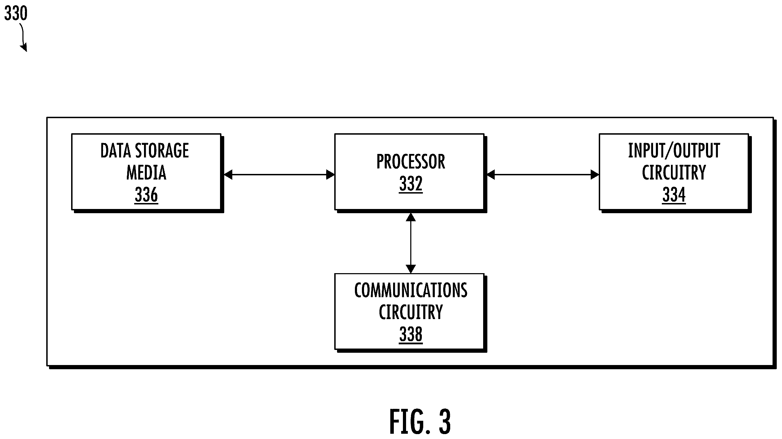

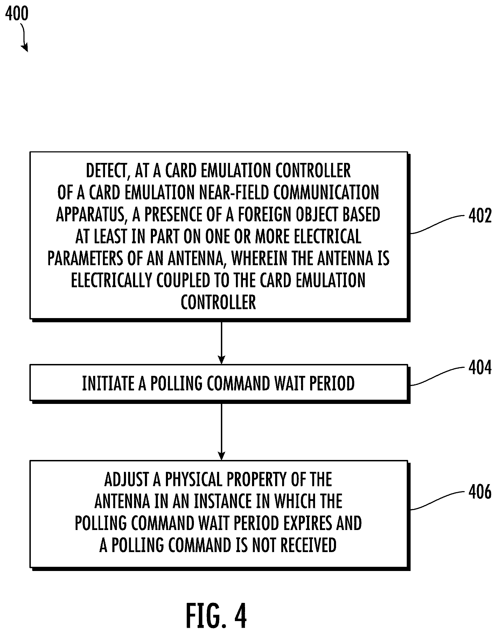

As depicted in FIG. 2, the card emulation NFC apparatus 204 includes a card emulation controller 220. A card emulation controller 220 includes one or more processors and one or more storage devices storing instructions that are operable, when executed by the one or more processors, to perform the functions of the card emulation NFC apparatus 204 as described herein. For example, the card emulation controller 220 may be configured to perform foreign object detection based on one or more electrical properties of the antenna 224. In addition, the card emulation controller 220 may be configured to initiate and monitor a polling command wait period. Further, the card emulation controller 220 may be configured to adjust a physical property of the antenna 224 to re-initiate transmission of a polling command from the master NFC device 202 upon expiration of the polling command wait period. Example electrical components of a card emulation controller 220 are described in relation to FIG. 3. Further details regarding the functions performed by the card emulation controller 220 are discussed in relation to FIG. 4 - FIG. 6.

As further depicted in FIG. 2, the example card emulation NFC apparatus 204 includes a card emulation tuning circuit 222. The card emulation tuning circuit 222 comprises all electrical components necessary to facilitate NFC data transmissions 206 according to the NFC protocol. In some embodiments, the card emulation tuning circuit 222 comprises an LC-circuit or tank circuit configured to operate at a resonant frequency between 10 megahertz and 19 megahertz; more preferably between 12 megahertz and 19 megahertz; most preferably between 13 megahertz and 14 megahertz.

A card emulation tuning circuit 222 may be altered to change the resonant frequency during operation. For example, the card emulation tuning circuit 222 may comprise one or more variable capacitors. The capacitance value of one or more of the one or more variable capacitors may be altered to change the resonant frequency of the LC circuit and thus the resonant frequency of the card emulation NFC apparatus 204 antenna 224. In order to alter the reference parameters significantly enough to trigger the master controller 221 to resend the polling command, the resonant frequency of the card emulation tuning circuit 222 may be altered by more than 100 kilohertz, for example ± 100 kilohertz from the resonant frequency of the master NFC device 202.

In some embodiments, the card emulation tuning circuit 222 may be altered such that the antenna 224 is operating at a resonant frequency lower than the NFC transaction frequency. For example, in an instance in which the NFC transaction frequency of the master NFC device 202 is 13.56 megahertz, the card emulation tuning circuit 222 may be altered to exhibit a resonant frequency at or below 13.46 megahertz. Alternatively, in some embodiments, the card emulation tuning circuit 222 may be altered such that the antenna 224 is operating at a resonant frequency higher than the NFC transaction frequency. For example, in an instance in which the NFC transaction frequency of the master NFC device 202 is 13.56 megahertz, the card emulation tuning circuit 222 may be altered to exhibit a resonant frequency at or above 13.66 megahertz.

In some embodiments, the card emulation controller 220 may be configured to alter the resonant frequency of the card emulation NFC apparatus 204 antenna 224. For example, the card emulation controller 220 may enable or disable one or more switches, changing the resonant properties of the LC circuit or tank circuit in the card emulation tuning circuit 222. In addition, the card emulation controller 220 may adjust the capacitor value of one or more variable capacitors, changing the resonant properties of the LC circuit in the card emulation tuning circuit 222. Changing the resonant frequency of the card emulation NFC apparatus 204 antenna 224 may cause the master NFC device 202 to re-send one or more polling commands based on a change in reference parameters measured by the master NFC device 202.

As further depicted in FIG. 2, the card emulation NFC apparatus 204 includes an antenna 224. An antenna 224 comprises one or more inductors, for example a coil inductor designed to induce a magnetic field with a resonant frequency based on the card emulation tuning circuit 222. The antenna 224 of the card emulation NFC apparatus 204 is configured to induce a current in the card emulation NFC apparatus 204 in an instance in which the master NFC device 202 is brought within a device range 226 of the card emulation NFC apparatus 204. The device range 226 is any distance in which the card emulation NFC apparatus 204 may complete an NFC data transmission 206. A card emulation NFC apparatus 204 may be configured to recognize in an instance in which the master NFC device 202 is within the device range 226 based on changing electrical parameters of the surrounding environment. A foreign object detection process may be utilized to determine an instance in which a master NFC device 202 is within the device range 226.

As further depicted in FIG. 2, the NFC system 200 includes a master NFC device 202. The master NFC device 202 includes a master controller 221, a master tuning circuit 223 and an antenna 225. A master controller 221 includes one or more processors and one or more storage devices storing instructions that are operable, when executed by the one or more processors, to perform the functions of the master NFC device 202 according to the specifications of an NFC protocol. For example, the master controller 221 may be configured to perform foreign object detection based on one or more electrical properties of the antenna 225.

In addition, the master controller 221 may be configured to monitor certain reference parameters of the surrounding environment to determine whether a change in the parameters of the surrounding environment warrants a re-issuance of a series of polling commands. Reference parameters of the surrounding environment may be measured based on changing electrical parameters of the antenna 225 based on the transmission of one or more wake-up signals. For example, impedance of the antenna 225, power loss of an electromagnetic field induced by the antenna 225, transfer efficiency of the antenna 225, current in the antenna 225, voltage of the antenna 225, phase difference between current and voltage in the antenna 225, coil quality factor of the antenna 225, and so on.

In some embodiments, the master controller 221 may determine a foreign object (e.g., an NFC device) is within a device range 226 based on a change in the monitored reference parameters of the surrounding environment. The master controller 221 may initiate transmission of a series of polling commands in response to detecting the presence of a foreign object based on the change in the monitored reference parameters. In an instance in which a valid response to the series of polling commands is not received within an established response window, the master controller 221 may determine that an NFC device is not present, but instead another foreign object not configured to respond to NFC data transmissions 206. In such an instance, the master controller 221 may update the reference parameters for the surrounding environment. With the reference parameters update, the master controller 221 may not detect a foreign object until a change in the surrounding environment occurs. Thus, in an instance in which the foreign object detected is an NFC device (e.g., card emulation NFC apparatus 204) and a valid response to the series of polling commands is not received, the master controller 221 may not resend the series of polling command until a change in reference parameters triggers the master controller 221 to resend the polling command. By adjusting a physical property of the antenna 224 on the card emulation NFC apparatus 204, the card emulation controller 220 may cause the reference parameters monitored by the master controller 221 to change, and the master controller 221 may re-initiate transmission of a polling command.

A master tuning circuit 223 comprises all electrical components necessary to facilitate NFC data transmissions 206 according to the NFC protocol. In some embodiments, the master tuning circuit 223 comprises an LC-circuit or tank circuit configured to operate at a resonant frequency between 10 megahertz and 19 megahertz.

The master tuning circuit 223 may cause the antenna 225 to radiate an electromagnetic field. In an instance in which the master NFC device 202 and thus the antenna 225 is within a device range 226 of the card emulation NFC apparatus 204 antenna 224, an electrical current may be induced in the card emulation NFC apparatus 204. In addition, NFC data transmissions 206 may occur between the master NFC device 202 and the card emulation NFC apparatus 204.

The card emulation NFC apparatus 204 is further configured to perform foreign object detection based on changing electrical parameters at the card emulation NFC apparatus 204 antenna 224. The card emulation NFC apparatus 204 may utilize any electrical parameter that may inform the presence of another NFC device (e.g., master NFC device 202 within the device range 226. For example, the card emulation controller 220 may be configured to monitor the impedance of the antenna 224. In an instance in which the impedance of the antenna 224 drops below a lower threshold or rises above an upper threshold, the card emulation controller 220 may determine a foreign object, such as an NFC device, is within the device range 226. Other electrical parameters that may be utilized by a card emulation NFC apparatus 204 to detect the presence of a foreign object may include power loss of an induced electromagnetic field, transfer efficiency, changes in current in the antenna 224, change in voltage in the antenna 224, phase difference between current and voltage in the antenna 224, coil quality factor of the antenna 224, and so on.

Referring now to FIG. 3, FIG. 3 illustrates a block diagram of an example apparatus 330 that can be specially configured in accordance with at least one example embodiment of the present disclosure. Specifically, FIG. 3 illustrates the card emulation controller 220 apparatus in accordance with at least one example embodiment of the present disclosure. The card emulation controller 220 apparatus includes processor 332, data storage media 336, input/output circuitry 334, and communications circuitry 338. In some embodiments, the card emulation controller 220 apparatus is configured, using one or more of the sets of circuitry 332, 334, 336, and/or 338, to execute and perform one or more of the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the card emulation controller 220 apparatus embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively, or additionally, in some embodiments, other elements of the card emulation controller 220 apparatus provide or supplement the functionality of another particular set of circuitry. For example, the processor 332 in some embodiments provides processing functionality to any of the sets of circuitry, the data storage media 336 provides storage functionality to any of the sets of circuitry, the communications circuitry 338 provides network interface functionality to any of the sets of circuitry, and/or the like.

In some embodiments, the processor 332 (and/or co-processor or any other processing circuitry assisting or otherwise associated with the processor) is/are in communication with the data storage media 336 via a bus for passing information among components of the card emulation controller 220 apparatus. In some embodiments, for example, the data storage media 336 is non-transitory and may include, for example, one or more volatile and/or non-volatile memories. In other words, for example, the data storage media 336 in some embodiments includes or embodies an electronic storage device (e.g., a computer readable storage medium). In some embodiments, the data storage media 336 is configured to store information, data, content, applications, instructions, or the like, for enabling the card emulation controller 220 apparatus to carry out various functions in accordance with example embodiments of the present disclosure.

The processor 332 can be embodied in a number of different ways. For example, in some example embodiments, the processor 332 includes one or more processing devices configured to perform independently. Additionally, or alternatively, in some embodiments, the processor 332 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the card emulation controller 220 apparatus, and/or one or more remote or "cloud" processor(s) external to the card emulation controller 220 apparatus.

In an example embodiment, the processor 332 is configured to execute instructions stored in the data storage media 336 or otherwise accessible to the processor. Alternatively, or additionally, the processor 332 in some embodiments is configured to execute hard-coded functionality. As such, whether configured by hardware or software methods, or by a combination thereof, the processor 332 represents an entity (e.g., physically embodied in circuitry) capable of performing operations according to an embodiment of the present disclosure while configured accordingly. Alternatively, or additionally, as another example in some example embodiments, when the processor 332 is embodied as an executor of software instructions, the instructions specifically configure the processor 332 to perform the algorithms embodied in the specific operations described herein when such instructions are executed. In some embodiments, the processor 332 includes or is embodied by a CPU, microprocessor, and/or the like that executes computer-coded instructions, for example stored via the non-transitory data storage media 336.

In some embodiments, the card emulation controller 220 apparatus includes input/output circuitry 334 that provides output to the user and, in some embodiments, to receive an indication of a user input. In some embodiments, the input/output circuitry 334 is in communication with the processor 332 to provide such functionality. The input/output circuitry 334 may comprise one or more user interface(s) and in some embodiments includes a display that comprises the interface(s) rendered as an electronic interface, a web user interface, an application user interface, a user device, a backend system, or the like. In some embodiments, the input/output circuitry 334 also includes a keyboard, a mouse, a joystick, a touch screen, touch areas, soft keys a microphone, a speaker, or other input/output mechanisms. The processor 332 and/or input/output circuitry 334 comprising the processor can be configured to control one or more functions of one or more user interface elements through computer program instructions (e.g., software and/or firmware) stored on a memory accessible to the processor (e.g., data storage media 336, and/or the like). In some embodiments, the input/output circuitry 334 includes or utilizes a user-facing application to provide input/output functionality to a client device and/or other display associated with a user. In some embodiments, the input/output circuitry 334 includes hardware, software, firmware, and/or a combination thereof, that facilitates simultaneously display of particular data via a plurality of different devices.

In some embodiments, the card emulation controller 220 apparatus includes communications circuitry 338. The communications circuitry 338 includes any means such as a device or circuitry embodied in either hardware or a combination of hardware and software that is configured to receive and/or transmit data from/to a network and/or any other device, circuitry, or module in communication with the card emulation controller 220 apparatus. In this regard, in some embodiments the communications circuitry 338 includes, for example, a network interface for enabling communications with a wired or wireless communications network. Additionally, or alternatively in some embodiments, the communications circuitry 338 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 338 includes circuitry for interacting with the antenna(s) and/or other hardware or software to cause transmission of signals via the antenna(s) or to handle receipt of signals received via the antenna(s). In some embodiments, the communications circuitry 338 enables transmission to and/or receipt of data from a client device, capture device, and/or other external computing device in communication with the card emulation controller 220 apparatus.

Additionally, or alternatively, in some embodiments, two or more of the sets of circuitries 332-338 are combinable. Alternatively, or additionally, in some embodiments, one or more of the sets of circuitry perform some or all of the functionality described associated with another component. For example, in some embodiments, two or more of the sets of circuitry 332-338 are combined into a single module embodied in hardware, software, firmware, and/or a combination thereof. Similarly, in some embodiments, one or more of the sets of circuitry, is/are combined with the processor 332, such that the processor 332 performs one or more of the operations described above with respect to each of these sets of circuitry 334-338.

EXAMPLE PROCESS

Referring now to FIG. 4, an example process 400 for initiating an NFC data transmission (e.g., NFC data transmission 106, 206). At block 402, a card emulation controller (e.g., card emulation controller 220) of a card emulation near-field communication apparatus (card emulation NFC apparatus 104, 204) detects a presence of a foreign object based at least in part on one or more electrical parameters of an antenna (e.g., antenna 224), wherein the antenna is electrically coupled to the card emulation controller. As described herein, the card emulation controller may be configured to monitor one or more electrical parameters of the surrounding environment, for example, by monitoring changes in the electrical parameters of the antenna. Changing electrical parameters of the environment surrounding the card emulation NFC apparatus may be an indication that a foreign object is within the device range (e.g., device range 226) of the card emulation NFC apparatus. A foreign obj ect may comprise a master NFC device (e.g., master NFC device 102, 202), another NFC device, and/or an object or device with no NFC support. Monitored electrical parameters may include impedance of an antenna, power loss of an induced electromagnetic field, transfer efficiency of the electromagnetic field, changes in current in the antenna, changes in voltage in the antenna, phase difference between current and voltage in the antenna, coil quality factor of the antenna, and so on.

At block 404, a card emulation controller of a card emulation NFC apparatus initiates a polling command wait period. A polling command wait period is a predetermined time period during which the card emulation NFC apparatus may wait to receive one or more polling commands from the detected foreign object. The polling command wait period may be initiated at a time at which the foreign object is detected. The polling command wait period may correspond with the timing of an NFC transmission. For example, in some embodiments, a master NFC device in low power mode may send a wake-up command and wait a pre-determined time period to allow a potential passive NFC device to power up. The pre-determined wait period may be between 5 milliseconds and 10 milliseconds, more specifically at or near 5.1 milliseconds. The master NFC device may further transmit a plurality of wake-up commands corresponding with a plurality of types of NFC devices. For example, the master NFC device may transmit a type A polling command, a type B polling command, a type F polling command, a type V polling command, and so on. The master NFC device maya be configured to wait the pre-determined time period for each type of NFC device. The polling command wait period may be selected to allow time for multiple wake-up commands to be transmitted. In addition, the polling command wait period may be selected to allow time for the one or more polling commands to be sent a received. For example, in some embodiments, the polling command may be sent over a time period at or near 40 milliseconds. The polling command wait period may be configured to extend for the transmission of multiple wake-up commands and multiple polling commands. Thus, in some embodiments, the polling command wait period may be selected to be between 5.1 milliseconds and 3 seconds; more preferably between 5.1 milliseconds and 1 second; most preferably between 5.1 milliseconds and 500 milliseconds.

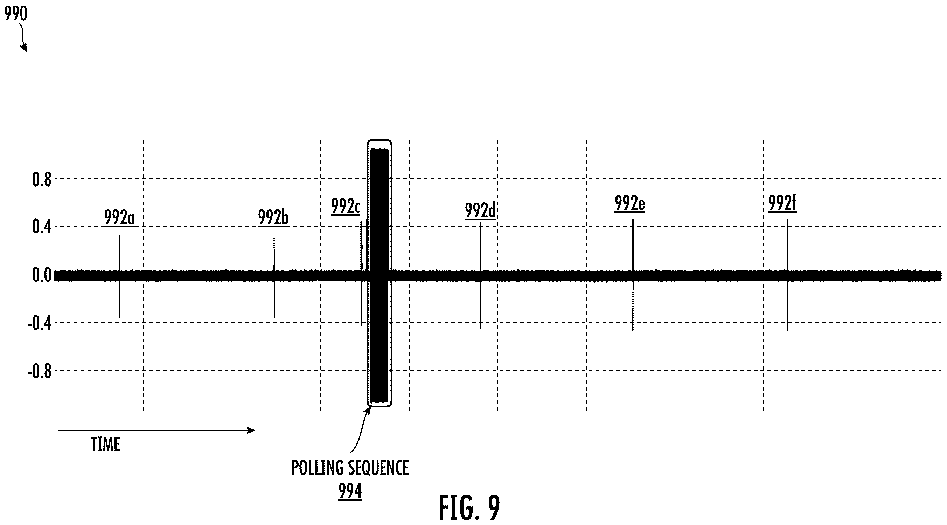

Referring now to FIG. 9, an example timing sequence 990 of an example master NFC device is depicted. As depicted in FIG. 9, a master NFC device may be configured to transmit wake-up signals 992a - 992f periodically. For example, a wake-up signal 992a - 992f may be transmitted every 400 milliseconds. A wake-up signal 992a - 992f is any electromagnetic signal transmitted by a master NFC device to provide necessary power to a passive NFC device to transmit NFC data or to notify an active device of the presence of the master NFC device. The frequency of the wake-up signal 992a - 992f transmission may be updated based on the desired responsiveness of the NFC system and/or the available power.

In an instance in which a master NFC device receives a valid response to the wake-up signal 992a - 992f, the master NFC device may transmit a polling sequence 994. For example, as depicted in FIG. 9., after the wake-up signal 992c is transmitted, a valid response is received followed by the polling sequence 994. A polling sequence 994 (e.g., polling command) is any electrical signal transmitted from an NFC master device to another NFC device to initiate an NFC data transmission between the two devices. A polling sequence 994 may include one or more requests for data from a receiving NFC device (e.g., card emulation NFC apparatus 104). Data returned by the receiving NFC device may be necessary to facilitate the transmission of data through an NFC data transmission. For example, data related to the NFC data transmission encoding, authentication data, and so forth.

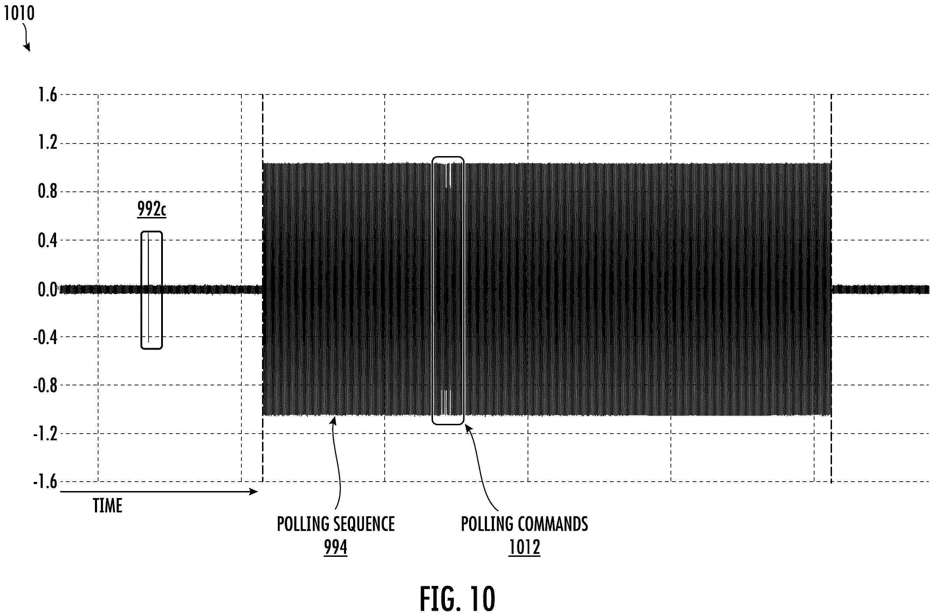

Referring now to FIG. 10, a close-up of an example timing sequence 1010, including the transmission of a plurality of polling commands 1012 is depicted. As depicted in FIG. 10, a wake-up signal 992c is transmitted. Once a potential NFC device is detected, the polling sequence 994 begins. The polling sequence 994 involves the transmission of an electromagnetic signal configured to provide power to a passive NFC card or NFC tag. A delay between the start of the polling sequence 994 and the transmission of polling commands 1012 enables a passive NFC device to receive sufficient power to transmit a valid response to the polling commands 1012. As further depicted in FIG. 10, a series of polling commands 1012 may be transmitted to the NFC device. In some embodiments, a master NFC device may transmit multiple polling commands configured to communicate with different types of NFC devices, for example type A cards, type B cards, type F cards, type V cards, etc. Once a valid response is received, an NFC data transmission may commence.

Transitioning back to FIG. 4, at block 406, a card emulation controller of a card emulation NFC apparatus adjusts a physical property of the antenna in an instance in which the polling command wait period expires and a polling command is not received.

In standard low power mode operation, a master NFC device periodically sends a low power card detection signal or wake-up command and monitors one or more electrical parameters of the antenna to detect potential NFC devices (e.g., card emulation NFC apparatus). In an instance in which the electrical parameters indicate a possible NFC device, The master NFC device may then transmit one or more polling commands to facilitate an NFC data transmission.

In some embodiments, the card emulation NFC apparatus may fail to receive the one or more polling commands and/or fail to transmit a valid response to the master NFC device. For example, movement of the card emulation NFC apparatus and/or master NFC device may break the transmission before the one or more polling commands are received. In addition, the master NFC device may fail to receive a valid response from the card emulation NFC apparatus within a pre-determined time period. In an instance in which a polling command is not received by the card emulation NFC apparatus or a valid response of the card emulation NFC apparatus is not received by the master NFC device, the master NFC device may update monitored reference parameters and return to a low power mode.

Thus, the master NFC device may not transmit another wake-up command until the monitored reference parameters of the surrounding environment significantly change. Upon expiration of the polling command wait period, a card emulation controller may determine if a polling command has been received. In an instance in which a polling command has not been received, the card emulation NFC apparatus may update one or more parameters of the card emulation NFC apparatus antenna and/or card emulation tuning circuit (e.g., card emulation tuning circuit 222) of the card emulation NFC apparatus. Changing one or more parameters of the card emulation NFC apparatus antenna may cause a change in electrical parameters of the environment surrounding the card emulation NFC apparatus. Changing electrical parameters of the environment surrounding the card emulation NFC apparatus may trigger re-transmission of the one or more polling commands by the master NFC device.

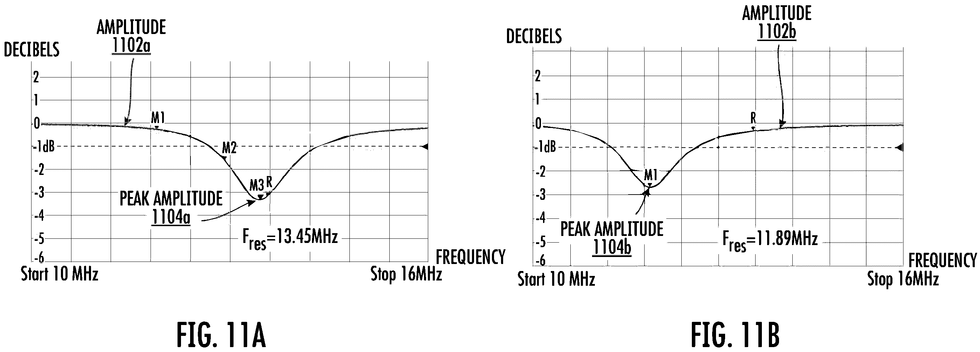

In one example embodiment, the value of one or more variable capacitors comprising the card emulation circuit may be adjusted. Adjusting the value of one or more variable capacitors may alter the resonant frequency of the card emulation tuning circuit. A change in resonant frequency may be detected by the master NFC device, triggering a foreign object detection and re-transmission of the one or more polling commands. Example resonant frequencies of a card emulation NFC apparatus are described in relation to FIG. 11A and FIG. 11B.

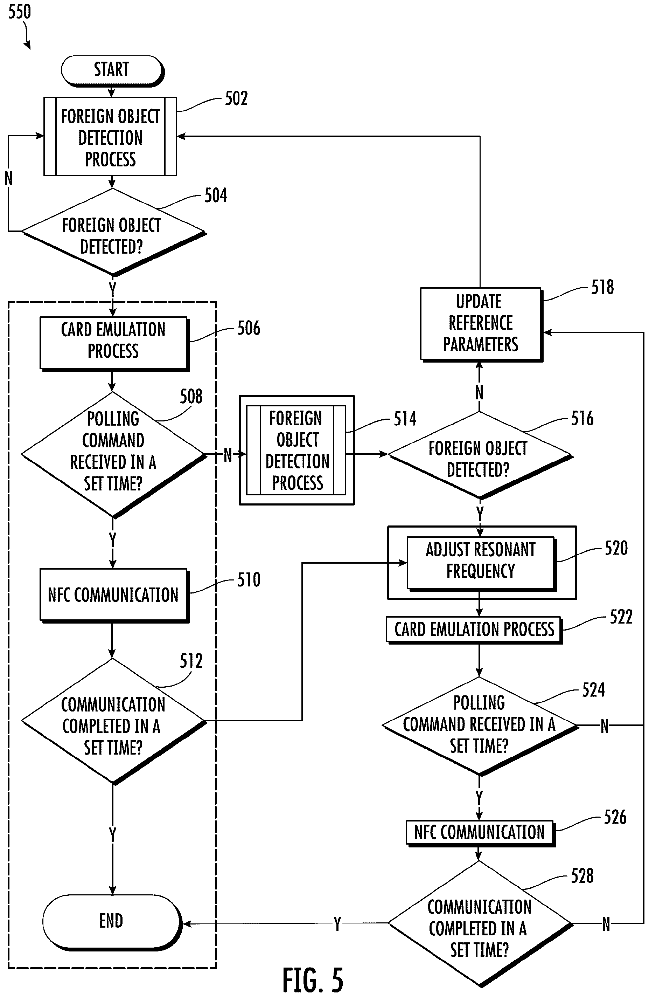

Referring now to FIG. 5, a flow chart depicting an example process 550 for initiating an NFC data transmission (e.g., NFC data transmission 106, 206) between a master NFC device (e.g., master NFC device 102, 202) and a card emulation NFC apparatus (card emulation NFC apparatus 104, 204).

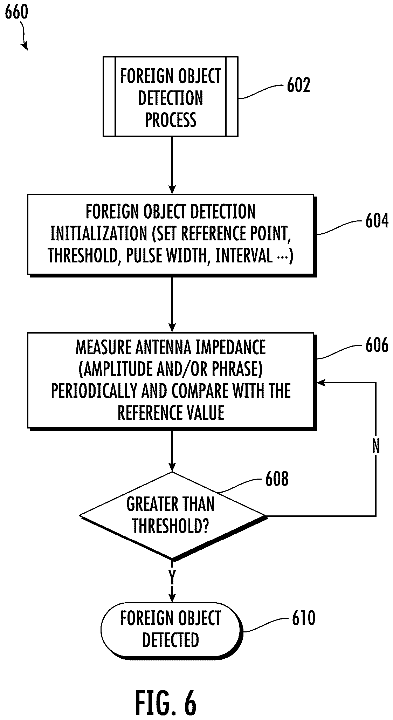

At block 502, a foreign object detection process is executed by the card emulation NFC apparatus. As described herein, the foreign object detection process may include monitoring one or more electrical parameters of the surrounding environment, for example, by measuring the electrical properties of the card emulation NFC apparatus antenna (e.g., antenna 224) and/or transmitting an electromagnetic signal and measuring electrical properties based on the transmission of the electromagnetic signal. The foreign object detection process is described more fully in relation to FIG. 6 - FIG. 8.

At block 504, the process 550 branches based on the foreign object detection process performed at block 502. In an instance in which a foreign object is detected, the process 550 continues at block 506. In an instance in which a foreign object is not detected, the process 550 returns to block 502.

At block 506, the card emulation process performed by the card emulation NFC apparatus begins. The card emulation NFC apparatus is configured to initiate a polling command wait period. In general, the card emulation process comprises receiving one or more polling commands from the master NFC device and providing a valid response. Once an NFC connection is established through the polling command procedure, an NFC data transmission may occur. The polling command wait period establishes the amount of time a card emulation NFC apparatus may wait at block 508.

At block 508, the process 550 waits to receive one or more polling commands from the detected foreign object. In an instance in which one or more polling commands are received, an NFC transaction time period is initiated, and the card emulation process continues at block 510. An NFC transaction time period is any time period within which the card emulation NFC apparatus and the master NFC device are configured to complete the NFC data transmission. The NFC transaction time period may be pre-configured based on the NFC standard. In some embodiments, the NFC transaction time period may be determined based on the type of the NFC data transmission, the size of the payload, the strength of the NFC connection, and/or other similar parameters. In some examples, the NFC transaction time period may be based on the frame waiting time (FWT) corresponding to the NFC transaction. In one specific example, before entering card emulation mode, the FWT and NFC transaction time period may depend on the last bit of the reader command, for example, 86 microseconds or 92 microseconds. Once in card emulation mode, the FWT may be determined through a dedicated NFC command. In some examples, the FWT may be determined based on a received frame waiting integer (FWI) read and/or received during an NFC transaction. For example, in some embodiments, the FWI may be an integer in a range from 0-14. Such an FWI may enable the calculation of the FWT and/or corresponding NFC transaction time period. In one example, the FWT may be determined by the equation:

$$FWT = 2^{FWI} \cdot (256 \times \frac{16}{f_c})$$

where $f_c$ is the carrier frequency of the NFC transaction. According to the above equation, the FWT may fall in a valid range from 302 microseconds (FWI=0) to 4949 milliseconds (FWI=14) during card emulation mode.

In an instance in which one or more polling commands are not received within the polling command wait period, the process 550 continues at block 514.

At block 510, the process 550 continues in the card emulation process by completing the NFC communication. The NFC communication may include one or more NFC data transmissions (e.g., NFC data transmission 106, 206). An NFC data transmission may include transmission of contact information, website URLs, files, documents, payment information, authentication information, tickets, and so forth.

At block 512, the process 550 determines whether the NFC communication has completed within the NFC transaction time period. In some embodiments, the card emulation NFC apparatus is configured to monitor the time period associated with the NFC communication. In an instance in which the NFC transaction time period has expired, and the NFC communication is not complete, the process 550 continues at block 520. In an instance in which the NFC communication is completed within the NFC transaction time period, the NFC communication completes.

At block 514, the foreign object detection process is executed again. In an instance in which a polling command is not received within the polling command wait period at block 508, the foreign object detection process is re-executed. Re-executing the foreign object detection process may inform the card emulation NFC apparatus whether the detected foreign object is within the device range (e.g., device range 226) of the card emulation NFC apparatus. Re-executing the foreign object detection process may inform the card emulation NFC apparatus whether the potential master NFC device is still present and whether changes to the electrical properties of the antenna are necessary.

At block 516, the process 550 branches based on the foreign object detection process performed at block 514. In an instance in which a foreign object is not detected, the process 550 continues at block 518. In an instance in which a foreign object is detected, the process 550 continues at block 520.

At block 518, the reference parameters for foreign object detection are updated. As described herein, foreign objects may be detected based on changing electrical properties of the environment surrounding the card emulation NFC apparatus. For example, the impedance measured at the antenna of the card emulation NFC apparatus may change in an instance in which a conductive object, master NFC device, or other device are brought within range of a card emulation NFC apparatus antenna. Updating the reference parameters ensures the tracked reference parameters represent the current surrounding environment such that a card emulation NFC apparatus may detect a change in the surrounding environment in an instance in which a foreign object is brought within the device range of the card emulation NFC apparatus. Once the reference parameters are updated, the process continues at block 502.

At block 520, the resonant frequency of the card emulation NFC apparatus antenna is adjusted. The resonant frequency may be adjusted by updating the capacitance value of one or more variable capacitors comprising the card emulation tuning circuit. Updating the resonant frequency of the card emulation NFC apparatus antenna may cause a change in the electrical properties in the environment surrounding the card emulation NFC apparatus and the foreign object (e.g., potential master NFC device). Such a change in the electrical properties may be monitored and detected by the foreign object. The change in electrical properties may further cause the foreign object to transmit and/or re-transmit the one or more polling commands in an instance in which the foreign object is a master NFC device.

The process 550 continues at block 522 where the card emulation process is once again initiated. The card emulation NFC apparatus is configured to again initiate the polling command wait period at block 522 and monitor the receipt of one or more polling command within the polling command wait period. The polling command wait period establishes the amount of time a card emulation NFC apparatus may wait at block 524 for a polling command.

At block 524, the process 550 waits to receive one or more polling commands from the detected foreign object. In an instance in which one or more polling commands are received, an NFC transaction time period is initiated, and the card emulation process continues at block 526. In an instance in which one or more polling commands are not received within the polling command wait period, the process 550 continues at block 518 where the reference parameters are updated before returning to block 502.

At block 526, the process 550 continues in the card emulation process by completing the NFC communication. The NFC communication may include one or more NFC data transmissions (e.g., NFC data transmission 106, 206). An NFC data transmission may include transmission of contact information, website URLs, files, documents, payment information, authentication information, tickets, and so forth.

At block 528, the process 550 determines whether the NFC communication has completed within the NFC transaction time period. In an instance in which the NFC transaction time period has expired, and the NFC communication is not complete, the process 550 continues at block 518. In an instance in which the NFC communication is completed within the NFC transaction time period, the NFC communication completes.

Referring now to FIG. 6, an example flowchart depicting a specific embodiment of a process 660 for detecting a foreign object within a device range of a card emulation NFC apparatus is provided.

At block 602, the foreign object detection process begins.

At block 604, the foreign object detection parameters are initialized. Foreign object detection may involve transmitting an electromagnetic pulse and measuring a change in electrical properties of the card emulation NFC apparatus antenna (e.g., antenna 224) based on the electromagnetic pulse. Various parameters may be adjusted based on the desired responsiveness of the card emulation NFC apparatus, the availability of power, the antenna parameters, the tuning circuit, and so on. For example, the pulse width and amplitude of the electromagnetic pulse may be adjusted. Similarly, the interval or frequency at which the electromagnetic pulses are transmitted may be adjusted. In addition, the maximum and/or minimum threshold of the measured electrical parameters (e.g., impedance) may be set. Further, the reference point of the electrical parameter from which the maximum and/or minimum threshold are determined may be initialized.

At block 606, the electrical parameter of the antenna used to detect the presence of a foreign object is measured. For example, the impedance of the antenna, the voltage and/or phase of the transmitted electromagnetic pulse, and other electrical parameters may be measured and received by the card emulation controller (e.g., card emulation controller 220).

At block 608, the measured electrical parameter is compared to one or more threshold values. If the measured electrical parameter is outside of the thresholds (e.g., exceeds a maximum threshold or drops below a minimum threshold), a foreign object is detected at block 610. If the measured electrical parameter is within a valid range defined by one or more threshold values, the process 660 returns to block 606.

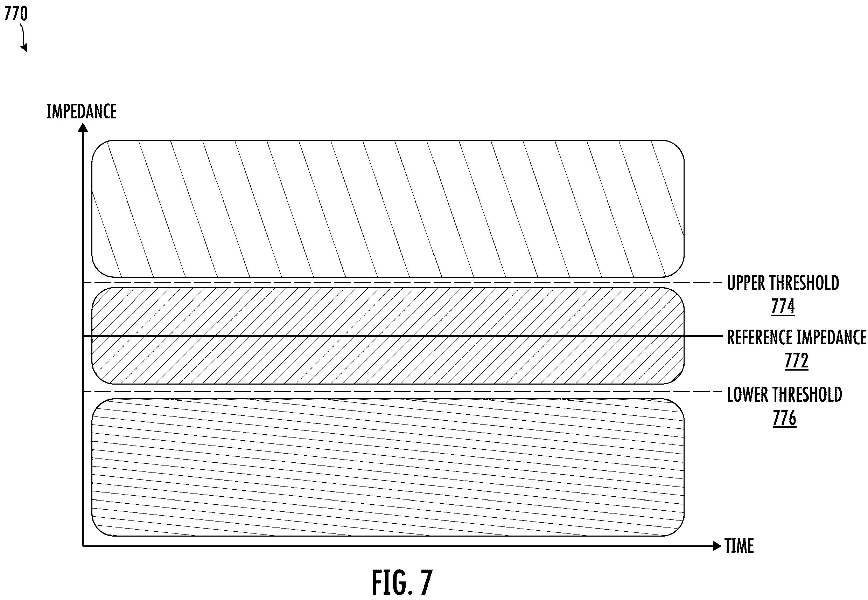

Referring now to FIG. 7, an example graph 770 depicting a reference impedance 772 (e.g., reference point), an upper threshold 774 impedance, and a lower threshold 776 impedance with respect to time are provided. Foreign object detection on a card emulation NFC apparatus, such as the process 660 described in relation to FIG. 6 may utilize a reference impedance 772 an upper threshold 774, and/or a lower threshold 776 to detect a presence of a foreign object. For example, a reference impedance 772 may be determined based on initial measurements of the impedance of an antenna during an initialization stage.

The upper threshold 774 and the lower threshold 776 may be determined based on the reference impedance 772. In some embodiments, the upper threshold 774 may be based on a percentage of the reference impedance 772 above the reference impedance 772, and the lower threshold 776 may be based on a percentage of the reference impedance 772 below the reference impedance 772. For example, in an instance in which the reference impedance 772 is determined to be 50 ohms, the upper threshold 774 may be 10% above the reference impedance 772 (e.g., 55 ohms) and the lower threshold 776 may be 10% below the reference impedance 772 (e.g., 45 ohms). In an instance in which the measured impedance of the antenna drops below the lower threshold 776 or rises above the upper threshold 774, a foreign object may be detected.

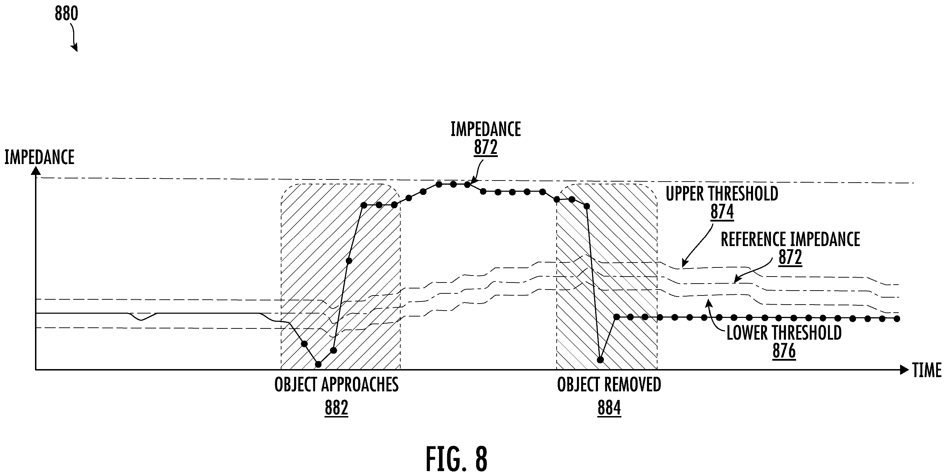

Referring now to FIG. 8, a graph 880 depicting a reference impedance 872 over time is provided. As depicted in FIG. 8, the graph 880 includes a reference impedance 872 and an upper threshold 874 and lower threshold 876 based on the reference impedance. The graph 880 further depicts a change in a measured impedance 872 over time, including the change in impedance 872 in an instance in which an object approaches 882 the antenna of a card emulation NFC apparatus, and the change in impedance 872 in an instance in which an object is removed 884 from within the device range of the card emulation NFC apparatus.

As depicted in FIG. 8, the graph 880 includes a reference impedance 872. A reference impedance 872 is any impedance value selected as the baseline impedance for an environment surrounding a card emulation NFC apparatus antenna at a given point of time. A reference impedance 872 may be initially determined during an initialization or calibration phase. As depicted in FIG. 8, the reference impedance 872 may be continually updated over time. For example, a card emulation controller may update a reference impedance 872 during foreign object detection. In another example, the card emulation controller may update the reference impedance 872 during the process 550 for initiating an NFC data transmission as depicted in FIG. 5.

As further depicted in FIG. 8, as the reference impedance 872 is updated over time, the upper threshold 874 and the lower threshold 876 are updated based on the determined reference impedance 872. Thus, the range of impedances which constitute a normal operating environment are continuously updated based on measurements of the environment surrounding the card emulation NFC apparatus.

As further depicted in FIG. 8, the impedance 872 measured at the card emulation NFC apparatus changes based on the presence of a foreign object. For example, as a foreign object approaches 882, the impedance 872 of the card emulation NFC apparatus antenna initially dips below the lower threshold 876 and as the foreign object moves closer, the impedance 872 moves well above the upper threshold 874. The impedance 872 remains relatively constant as the foreign object remains within the device range of the card emulation NFC apparatus antenna. When the object is removed 884, the impedance 872 drops back down, below the updated lower threshold 876. Thus, the rapid changes in impedance 872 experienced in a card emulation NFC apparatus antenna as a foreign object approaches 882 and as the foreign object is removed 884 may be detected by a card emulation NFC apparatus, signaling the presence of a foreign object.

Although the graph 880 depicts an impedance 872, the principles may apply to any electrical property used to determine the presence of a foreign object, such as voltage, current, phase shift, etc.

Referring now to FIG. 11A, an amplitude 1102a of an example signal generated by a card emulation NFC apparatus antenna at various frequencies is depicted. As depicted in FIG. 11A, the example signal may be configured to provide a peak amplitude 1104a at a resonant frequency. For example, the generated signal depicted by the graph in FIG. 11A exhibits a resonant frequency at or around 13.45 megahertz, corresponding to a default resonant frequency of an NFC data transmission.

As described herein, the resonant frequency of a card emulation NFC apparatus antenna may be changed by adjusting one or more electrical components of a card emulation tuning circuit. For example, the capacitance value of a variable capacitor may be changed, one or more switches may be enabled or disabled, and so on. As depicted in FIG. 11B, adjusting one or more electrical components of a card emulation tuning circuit changes the peak amplitude 1104b of the amplitude 1102b of the signal generated by the card emulation NFC apparatus antenna. As described herein, the resonant frequency of the card emulation NFC apparatus may be changed by $\pm 100$ kilohertz in order to trigger a resend of a new series of polling commands. For example, the generated signal depicted by the graph in FIG. 11B exhibits a resonant frequency at or around 11.89 megahertz, corresponding to a second resonant frequency, different than the default frequency, and intended to trigger a master NFC device to resend polling commands.

While this detailed description has set forth some embodiments of the present invention, the appended claims cover other embodiments of the present invention which differ from the described embodiments according to various modifications and improvements. For example, one skilled in the art may recognize that such principles may be applied to any active electronic device that is configured to perform an NFC data transaction with a master NFC device configured to operate in a low power mode. For example, a card emulation NFC device on a mobile phone, tablet, laptop, wearable electronic device, headset, or other similar device.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

**Claims**

1. A card emulation near-field communication (NFC) apparatus, comprising:

   - an antenna; and
   - a card emulation controller electrically coupled to the antenna, comprising one or more processors and one or more storage devices storing instructions that are operable, when executed by the one or more processors, to:

     - initiate at least one foreign object detection process to detect a presence of a foreign object based at least in part on one or more electrical parameters of the antenna;
     - initiate a polling command wait period; and
     - adjust a physical property of the antenna in an instance in which the polling command wait period expires and a polling command is not received.

2. A method for initiating an NFC data transmission, the method comprising:

   - initiating, at a card emulation controller of a card emulation near-field communication apparatus, at least one foreign object detection process to detect a presence of a foreign object based at least in part on one or more electrical parameters of an antenna, wherein the antenna is electrically coupled to the card emulation controller;
   - initiating a polling command wait period; and
   - adjusting a physical property of the antenna in an instance in which the polling command wait period expires and a polling command is not received.

3. The apparatus of claim 1, or the method of claim 2, wherein the one or more electrical parameters comprise an impedance of the antenna.

4. The apparatus of claim 1 or 3, or the method of claim 2 or 3,wherein the physical property of the antenna comprises a resonant frequency of the antenna.

**5.** The apparatus or the method of claim 4, wherein the antenna is configured to operate at a first resonant frequency and wherein adjusting the physical property of the antenna comprises configuring the antenna to operate at a second resonant frequency.

**6.** The apparatus of claim 5, wherein the first resonant frequency is between 10 megahertz and 19 megahertz.

**7.** The apparatus of claim 5 or 6, wherein the difference between the second resonant frequency and the first resonant frequency is equal to or greater than 100 kilohertz.

**8.** The apparatus of any of claim 4 to 7, further comprising:

- a card emulation tuning circuit electrically coupled to the card emulation controller and the antenna, the card emulation tuning circuit comprising:
- one or more variable capacitors configured to adjust the resonant frequency of the antenna,

wherein adjusting the physical property of the antenna comprises adjusting a capacitance value of at least one of the one or more variable capacitors.

**9.** The apparatus of any of claims 1, 3 to 7, or the method of claim 2 to 5 and 8, wherein the foreign object is a master near-field communication device.

**10.** The apparatus or the method of claim 9, wherein adjusting the physical property of the antenna in an instance in which the polling command wait period expires and the polling command is not received causes the master near-field communication device to resend the polling command.

**11.** The apparatus of any of claims 1, 3 to 10, wherein the polling command wait period is between 5.1 milliseconds and 3 seconds.

**12.** The method of claim 5 or to any of claims 9 to 11 in their attachment to claim 5, further comprising:

- adjusting one or more variable capacitors comprised in a card emulation tuning circuit electrically coupled to the card emulation controller and the antenna, wherein the one or more variable capacitors are configured to adjust the resonant frequency of the antenna.

**13.** A computer program product for initiating an NFC transmission, the computer program product comprising at least one non-transitory computer-readable storage medium having computer-readable program code portions stored therein, the computer-readable program code portions comprising an executable portion configured to:

- detect, at a card emulation controller of a card emulation near-field communication apparatus, a presence of a foreign object based at least in part on one or more electrical parameters of an antenna, wherein the antenna is electrically coupled to the card emulation controller;
- initiate a polling command wait period; and
- adjust a physical property of the antenna in an instance in which the polling command wait period expires and a polling command is not received.

100

MASTER NFC DEVICE
102

106

CARD EMULATION
NFC APPARATUS
104

FIG. 1

FIG. 2

330

DATA STORAGE MEDIA 336

PROCESSOR 332

INPUT/OUTPUT CIRCUITRY 334

COMMUNICATIONS CIRCUITRY 338

**FIG. 3**

400

DETECT, AT A CARD EMULATION CONTROLLER
OF A CARD EMULATION NEAR-FIELD COMMUNICATION
APPARATUS, A PRESENCE OF A FOREIGN OBJECT BASED
AT LEAST IN PART ON ONE OR MORE ELECTRICAL
PARAMETERS OF AN ANTENNA, WHEREIN THE ANTENNA IS
ELECTRICALLY COUPLED TO THE CARD EMULATION
CONTROLLER
— 402

INITIATE A POLLING COMMAND WAIT PERIOD
— 404

ADJUST A PHYSICAL PROPERTY OF THE
ANTENNA IN AN INSTANCE IN WHICH THE
POLLING COMMAND WAIT PERIOD EXPIRES AND
A POLLING COMMAND IS NOT RECEIVED
— 406

FIG. 4

FIG. 5

660

FOREIGN OBJECT
DETECTION
PROCESS — 602

FOREIGN OBJECT DETECTION
INITIALIZATION (SET REFERENCE POINT,
THRESHOLD, PULSE WIDTH, INTERVAL ···) — 604

MEASURE ANTENNA IMPEDANCE
(AMPLITUDE AND/OR PHRASE)
PERIODICALLY AND COMPARE WITH THE
REFERENCE VALUE — 606

608
GREATER THAN
THRESHOLD?

N

Y

FOREIGN OBJECT
DETECTED — 610

FIG. 6

FIG. 7

EP 4 622 126 A1

FIG. 8

990

0.8

0.4

0.0

-0.4

-0.8

992a

992b

992c

992d

992e

992f

TIME

POLLING SEQUENCE
994

FIG. 9

FIG. 10

FIG. 11A

FIG. 11B

Europäisches
Patentamt

European
Patent Office

Office européen
des brevets

## EUROPEAN SEARCH REPORT

**Application Number**

EP 25 16 3387

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/121401 A1 (TSUKAMOTO NOBUYUKI [JP]) 25 April 2019 (2019-04-25) | 1-9, 11-13 | INV. H04B5/26 |
| A | * paragraphs [0033] - [0035], [0110] - [0111]; figures 9,11 * | 10 | H02J50/00 H04B5/77 H04B5/79 |
| X | US 2019/385788 A1 (ARISAWA SHIGERU [JP] ET AL) 19 December 2019 (2019-12-19) | 1-9, 11-13 | H04W4/80 |
| A | * paragraphs [0131] - [0133]; figure 14 * | 10 | |
| A | US 2019/140483 A1 (IKEFUJI YOSHIHIRO [JP]) 9 May 2019 (2019-05-09) * paragraph [0136] * | 4-8 | |

**TECHNICAL FIELDS SEARCHED (IPC)**

H04B
H04W
H02J

The present search report has been drawn up for all claims

| Place of search | Date of completion of the search | Examiner |
|---|---|---|
| Munich | 16 July 2025 | Franz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 3387

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2025

| Patent document cited in search report | Publication date | Patent family member(s) | | Publication date |
|---|---|---|---|---|
| US 2019121401 A1 | 25-04-2019 | JP | 7002911 B2 | 20-01-2022 |
| | | JP | 2019080384 A | 23-05-2019 |
| | | US | 2019121401 A1 | 25-04-2019 |
| US 2019385788 A1 | 19-12-2019 | CN | 103427496 A | 04-12-2013 |
| | | JP | 5929493 B2 | 08-06-2016 |
| | | JP | 2013240235 A | 28-11-2013 |
| | | US | 2013307346 A1 | 21-11-2013 |
| | | US | 2019385788 A1 | 19-12-2019 |
| US 2019140483 A1 | 09-05-2019 | JP | 2019004691 A | 10-01-2019 |
| | | US | 2019140483 A1 | 09-05-2019 |

EPO FORM P0459

For more details about this annex : see Official Journal of the European Patent Office, No. 12/82